# EUROPÄISCHE PATENTSCHRIFT

(11) **EP 3 635 318 B1**
(45) Veröffentlichungstag und Bekanntmachung des Hinweises auf die Patenterteilung: **03.03.2021**
(21) Anmeldenummer: 18731377.0
(22) Anmeldetag: 05.06.2018
(51) Int. Cl.: F28D 20/02, F24D 11/02

(54) **LATENTWÄRMESPEICHERSYSTEM MIT EINEM LATENTWÄRMESPEICHER UND VERFAHREN ZUM BETREIBEN EINES LATENTWÄRMESPEICHERSYSTEMS**
LATENT HEAT STORAGE SYSTEM HAVING A LATENT HEAT STORAGE DEVICE AND METHOD FOR OPERATING A LATENT HEAT STORAGE SYSTEM
SYSTÈME DE RÉGULATEUR THERMIQUE À CHANGEMENT D'ÉTAT AVEC UN RÉGULATEUR THERMIQUE À CHANGEMENT D'ÉTAT ET PROCÉDÉ POUR FAIRE FONCTIONNER UN SYSTÈME DE RÉGULATEUR THERMIQUE À CHANGEMENT D'ÉTAT

(30) Priorität: 06.06.2017 DE 102017112407
(43) Veröffentlichungstag der Anmeldung: 15.04.2020
(73) Patentinhaber: Viessmann Werke GmbH & Co. KG, 35107 Allendorf (Eder) (DE)
(72) Erfinder: FUCHS, Sven, 70186 Stuttgart (DE); ORTLIEB, Tobias, 82319 Starnberg (DE); PFANNKUCH, Moritz, 70197 Stuttgart (DE)
(74) Vertreter: RPK Patentanwälte Reinhardt, Pohlmann und Kaufmann Partnerschaft mbB
(86) Internationale Anmeldenummer: PCT/EP2018/064693
(87) Internationale Veröffentlichungsnummer: WO 2018/224465

(56) Entgegenhaltungen:
- EP-A2- 2 428 760
- EP-A2- 2 602 558
- DE-A1- 3 011 840
- DE-A1-102013 213 823
- DE-U1-202006 005 592

## Beschreibung

### Stand der Technik

Die Erfindung betrifft ein Latentwärmespeichersystem mit einem Latentwärmespeicher und ein Verfahren zum Betreiben eines Latentwärmespeichersystems.

Aus der EP 2614330 A1 ist ein Eisspeichersystem bekannt, bei dem ein Entzugswärmetauscher während der Heizperiode Wärme aus einem Eisspeicher entzieht, bis der Eisspeicher thermisch entladen ist. Das Wärmeträgermedium des Entzugswärmetauschers gelangt an den Vorlauf einer Wärmepumpe, welche aus der zugeführten niedrigkalorischen Wärme ein höheres Temperaturniveau an ihrem Ausgang erzeugt. Bei thermischer Entladung des Eisspeichers ist ein vorbestimmtes Volumen um den Entzugswärmetauscher vollständig zu Eis erstarrt.

Der Wärmeübergang zwischen dem Wärmeträgermedium im Entzugswärmetauscher und dem Speichermedium ist begrenzt. Das Eis um den Entzugswärmetauscher kann stark unterkühlt sein, wenn der Eisspeicher einen hohen Vereisungsgrad aufweist. Die Folge ist, dass die Wärmepumpe in solchen Betriebszuständen abschaltet. Dadurch sinkt die Effizienz des Systems.

Die EP 2602558 A2 offenbart ein Latentwärmespeichersystem und Verfahren zum Betrieb gemäß dem Obergriffen von Anspruch 1 und 9, bei dem ein Latentwärmespeicher mit einer Wärmepumpe gekoppelt ist.

Weiteren technologischen Hintergrund offenbaren die DE 202006005592 U1, die EP 2428760 A2, die DE 102013213823 A1 und die DE 3011840 A1.

### Offenbarung der Erfindung

Die Aufgabe der Erfindung ist es, ein Latentwärmespeichersystem zu schaffen, das eine gesteigerte Effizienz aufweist.

Eine weitere Aufgabe der Erfindung ist es, ein günstiges Verfahren zum Betreiben eines solchen Latentwärmespeichersystems zu schaffen.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Die Erfindung geht aus von einem Latentwärmespeichersystem umfassend wenigstens einen Latentwärmespeicher, der ein Speichermedium mit latenter Wärme enthält, wenigstens eine mit dem Latentwärmespeicher gekoppelte Wärmepumpe, und wenigstens einen Entzugskreislauf mit einem ersten Wärmeträgermedium, mit dem im Normalbetrieb bestimmungsgemäß Wärme aus dem Speichermedium entziehbar und der Wärmepumpe eingangsseitig zuführbar ist, sowie einen in Kontakt mit dem Speichermedium stehenden Entzugswärmetauscher, der mit dem Entzugskreislauf verbunden ist.

Es wird vorgeschlagen, dass eine Kopplungsvorrichtung in einer Verbindungsleitung zwischen dem Entzugswärmetauscher und der Wärmepumpe angeordnet ist, die wenigstens zeitweise ein zweites Wärmeträgermedium, das von wenigstens einer Wärmequelle erwärmbar ist, in einen Abschnitt der Verbindungsleitung zur Wärmepumpe zuführt.

Vorzugsweise ist das Latentwärmespeichersystem mit einem Verfahren betreibbar, wie es gemäß einem weiteren Aspekt der Erfindung nachstehend erläutert ist. Bei dem vorgeschlagenen Verfahren zum Betreiben des Latentwärmespeichersystems, umfasst das Latentwärmespeichersystem wenigstens einen Latentwärmespeicher, der ein Speichermedium mit latenter Wärme enthält, wenigstens eine mit dem Latentwärmespeicher gekoppelte Wärmepumpe und wenigstens einen Entzugskreislauf mit einem ersten Wärmeträgermedium, mit dem im Normalbetrieb bestimmungsgemäß Wärme aus dem Speichermedium entzogen und der Wärmepumpe eingangsseitig zugeführt wird. Der wenigstens eine Latentwärmespeicher umfasst wenigstens einen in Kontakt mit dem Speichermedium stehenden Entzugswärmetauscher, der mit dem Entzugskreislauf verbunden ist. Wenigstens zeitweise wird ein zweites Wärmeträgermedium, das von wenigstens einer Wärmequelle erwärmt wird, in einen Abschnitt der Zuführleitung zugeführt.

Die Erfindung wirkt vorteilhaft in Betriebszuständen, in denen der Latentwärmespeicher stark oder vollständig thermisch entladen, d.h. das Speichermedium weitestgehend oder in einem vorbestimmten Bereich vollständig erstarrt ist und bei denen das zweite Wärmeträgermedium der wenigstens einen Wärmequelle eine höhere Temperatur als das erste Wärmeträgermedium des Entzugswärmetauschers aufweist.

Dann kann der Vorlauf der Wärmepumpe mit einem Wärmeträgermedium beaufschlagt werden, das eine Temperatur aufweist, die höher ist als die Temperatur, welche das erste Wärmeträgermedium am Ausgang des Entzugswärmetauschers Richtung Wärmepumpe aufweist. Das erste Wärmeträgermedium kann mit dem wärmeren zweiten Wärmeträgermedium der wenigstens einen Wärmequelle gemischt werden und auf diese Weise erwärmt werden. Die Vorlauftemperatur der Wärmepumpe kann hierdurch wenigstens zeitweise oberhalb einer kritischen Temperatur für den Vorlauf der Wärmepumpe gehalten werden, bei der die Wärmepumpe sonst stillgelegt werden muss.

Ferner ist erfindungsgemäß wenigstens ein Regenerationskreislauf mit dem zweiten Wärmeträgermedium vorgesehen, mit dem im Normalbetrieb bestimmungsgemäß Wärme von wenigstens einer Wärmequelle in das Speichermedium zuführbar ist, wobei der wenigstens eine Latentwärmespeicher eine Regenerationsanordnung innerhalb des Speichermediums umfasst, wobei die Regenerationsanordnung mit dem Regenerationskreislauf verbunden ist.

Hierdurch kann die Wärmepumpe trotz thermisch entladenem Latentwärmespeicher länger in Betrieb sein und einen Verbraucher mit Wärme versorgen.

Der Latentwärmespeicher kann beispielsweise ein Eisspeicher mit Wasser als Speichermedium sein. Im thermisch entladenen, d.h. vereisten Zustand weist das Eis eine Temperatur von höchstens 0°C, sogar bis zu -10°C auf. Entsprechend niedrig ist die Temperatur des ersten Wärmeträgermediums. Unterschreitet die Temperatur des ersten Wärmeträgermediums eine kritische Temperatur für den Vorlauf der Wärmepumpe, beispielsweise 0°C, muss diese abgeschaltet werden. Ist das zweite Wärmeträgermedium wärmer, kann die Vorlauftemperatur durch Zumischen des Wärmeträgermediums oder Wärmeübertrag des zweiten auf das erste Wärmeträgermedium angehoben werden.

Unter "bestimmungsgemäß Wärme aus dem Speichermedium entziehbar" soll verstanden werden, dass der Entzugswärmetauscher im Normalbetrieb Wärme aus dem Speichermedium entzieht und dieses dabei abkühlt. Vorzugsweise kann bis zum thermischen Entladen eines Bereichs um den Entzugswärmetauscher Wärme entnommen werden. Dies ist im Normalbetrieb beispielsweise im Winter der Fall. Von Beginn der kalten Jahreszeit bis zum Ende der kalten Jahreszeit erstarrt das Volumen um den Entzugswärmetauscher sukzessive. Bei Wasser als Speichermedium bildet sich in vorzugsweise kontrollierter Weise ein monolithischer Eisblock, in den der Entzugswärmetauscher eingebettet ist. Der Wärmeübertrag vom Speichermedium in das Wärmeträgermedium im Entzugswärmetauscher erfolgt über den monolithischen Eisblock. Der Entzugswärmetauscher ist im Entzugskreislauf vorzugsweise an die Wärmepumpe angeschlossen, welche die entzogene Wärme auf ein höheres Temperaturniveau anhebt, das von einem Verbraucher genutzt werden kann. Ein typisches Wärmeträgermedium im Entzugskreislauf kann beispielsweise Sole oder ein Glykol-Wassergemisch sein.

Gemäß einer günstigen Ausgestaltung kann der Abschnitt der Verbindungsleitung zur Wärmepumpe, in den das zweite Wärmeträgermedium zugemischt wird, zwischen Kopplungsvorrichtung und Wärmepumpe angeordnet sein. Dies ermöglicht ein gezieltes Zudosieren eines Volumenstroms des zweiten Wärmeträgermediums. Insbesondere kann das Zudosieren mit variablem, insbesondere mit geregeltem oder gesteuertem Volumenstrom erfolgen.

Dadurch, dass erfindungsgemäß wenigstens ein Regenerationskreislauf mit dem zweiten Wärmeträgermedium vorgesehen ist, , kann die Wärmequelle günstigerweise ein Luftabsorber sein, der Wärme aus der Umgebungsluft aufnimmt, eine Abluftanlage, bei der Wärme aus Abluft aufgenommen wird, oder eine sonstige Wärmequelle. Optional kann eine Kombination von zwei oder mehr Wärmequellen vorgesehen sein. Zweckmäßigerweise kann das zweite Wärmeträgermedium des Regenerationskreislaufs dasselbe sein wie das erste Wärmeträgermedium. Hierdurch ist ein einfaches Mischen der Wärmeträgermedien durch die Kopplungsvorrichtung möglich.

Unter "bestimmungsgemäß Wärme in das Speichermedium zuführbar" soll verstanden werden, dass die Regenerationsanordnung im Normalbetrieb Wärme in das Speichermedium abgibt und dieses dabei erwärmt. Durch die Wärmezufuhr kann der thermisch entladene Latentwärmespeicher aufgeladen werden. Vorzugsweise wird der erstarrte Bereich um den Entzugswärmetauscher dabei wieder aufgetaut. Dies ist im Normalbetrieb beispielsweise im Sommer der Fall. Bevorzugt vom Beginn der warmen Jahreszeit an bis zum Ende der warmen Jahreszeit verflüssigt sich durch die Wärmezufuhr das erstarrte Volumen des Speichermediums um den Entzugswärmetauscher sukzessive, vorzugsweise in kontrollierter Weise, wobei der darin eingebettete Entzugswärmetauscher nach und nach wieder freigelegt wird. Bei Wasser als Speichermedium wird in kontrollierter Weise der monolithische Eisblock aufgetaut. Der Wärmeübertrag vom erwärmten Speichermedium in das Wärmeträgermedium im Entzugswärmetauscher erfolgt über den schmelzenden monolithischen Eisblock. Ist dieser geschmolzen, und wird weiter Wärme über die Regenerationsanordnung zugeführt, steigt die Temperatur des Speichermediums entsprechend an.

Die Regenerationsanordnung ist im Regenerationskreislauf günstigerweise mit einer oder mehreren Wärmequellen verbunden. Vorzugsweise ist eine Wärmequelle eine Luftabsorbereinrichtung, die Wärme aus der Umgebungsluft aufnimmt. Optional können Wärmequellen wie Abwärme von Kältemaschinen, Abluft von Kühlanlagen und dergleichen, alternativ oder zusätzlich wenigstens zeitweise angeschlossen sein. Ein typisches Wärmeträgermedium im Regenerationskreislauf kann beispielsweise Sole oder ein Glykol-Wassergemisch sein. Dies ist vorzugsweise der Fall, wenn die Regenerationsanordnung ein Wärmetauscher ist, der im Speichermedium angeordnet ist. Alternativ kann eine "offene" Regenerationsanordnung vorgesehen sein, bei der das Speichermedium selbst als Wärmeträgermedium der Regenerationsanordnung und zumindest teilweise im Regenerationskreislauf genutzt wird. Die Regenerationsanordnung weist dann einen oder mehrere Auslässe für das Wärmeträgermedium in das Speichermedium und einen oder mehrere Einlässe für das Speichermedium in den Regenerationskreislauf auf. Im Regenerationskreislauf kann zweckmäßigerweise ein Wärmetauscher angeordnet sein, so dass in einem mit der oder den Wärmequellen verbundenen Bereich des Regenerationskreislaufs ein anderes Wärmeträgermedium, beispielsweise Sole oder ein Glykol-Wassergemisch, zirkulieren kann.

Solange erstarrtes Speichermedium im Latentwärmespeicher vorhanden ist, oder solange das Speichermedium noch kalt genug ist, kann über den Regenerationskreislauf gekühlt werden. Beispielsweise kann im Sommer ein Wohnhaus gekühlt werden. Das kalte Wärmeträgermedium im Regenerationskreislauf kann über einen Wärmetauscher beispielsweise einen Wohnbereich kühlen.

Der wenigstens eine Entzugswärmetauscher und die wenigstens eine Regenerationsanordnung sind vorzugsweise aufeinander abgestimmt, so dass ein saisonales Auftauen und Erstarren des Speichermediums in beherrschbarer Weise erfolgen kann. Der Entzugskreislauf und der Regenerationskreislauf sind dabei im Normalbetrieb zwangsläufig hydraulisch getrennt.

Gemäß einer günstigen Ausgestaltung kann die Kopplungsvorrichtung den Regenerationskreislauf mit der Wärmepumpe strömungsmäßig verbinden, so dass die Regenerationsanordnung wenigstens teilweise überbrückt sein kann. Vorteilhaft kann eine variable Einstellung des Volumenstroms des zweiten Wärmeträgermediums, das sonst im Regenerationskreislauf fließt, in den Abschnitt der vorlaufseitigen Verbindungsleitung zur Wärmepumpe erfolgen. Der Volumenstrom kann bedarfsabhängig nach gewünschter Temperatur im Vorlauf der Wärmepumpe und/oder verfügbarer Wärme im Wärmeträgermedium eingestellt werden.

Gemäß einer günstigen Ausgestaltung kann die Kopplungsvorrichtung ein regelbares und/oder steuerbares Mischelement umfassen. Dies erlaubt eine genaue Einstellung und Variation des Volumenstroms an zweitem Wärmeträgermedium, das die Temperatur des ersten Wärmeträgermediums des Entzugswärmetauschers anhebt.

Gemäß einer günstigen Ausgestaltung kann im Latentwärmespeichersystem eine Regel- und/oder Steuervorrichtung vorgesehen sein, welche die Kopplungsvorrichtung abhängig von wenigstens einem Betriebsparameter des Latentwärmespeichers und/oder des Latentwärmespeichersystems betätigen kann. Eine genaue Einstellung der Mischtemperatur im Abschnitt der Verbindungsleitung zur Wärmepumpe des zweiten Wärmeträgermediums abhängig von einem oder mehreren Betriebsparametern des Latentwärmespeichersystems und/oder der Wärmepumpe ist möglich.

Gemäß einer günstigen Ausgestaltung kann der wenigstens eine Regenerationskreislauf als Wärmequelle einen Luftabsorber aufweisen. Hiermit kann aus erhöhten Umgebungstemperaturen vorteilhaft Nutzen gezogen werden.

Gemäß einer günstigen Ausgestaltung kann die Regenerationsanordnung einen im Speichermedium angeordneten Wärmetauscher aufweisen. Vorteilhaft kann als Wärmeträgermedium im Entzugswärmetauscher und im Wärmetauscher der Regenerationsanordnung dasselbe Medium als Wärmeträgermedium eingesetzt werden, das über die Kopplungsvorrichtung einfach zu mischen ist.

Gemäß einer günstigen Ausgestaltung kann die Regenerationsanordnung einen oder mehrere Zuflüsse und Abflüsse im Latentwärmespeicher aufweisen und das Speichermedium wenigstens in einem Teil des Regenerationskreislaufs zirkuliert. Das zweite Wärmeträgermedium kann dann indirekt über einen Wärmetauscher mit dem ersten Wärmeträgermedium gekoppelt werden. Die Regenerationsanordnung ist in diesem Fall als "offenes" System ausgebildet und weist Zuflüsse und Abflüsse im Latentwärmespeicher auf. Beispielsweise können die Zuflüsse und Abflüsse durch Ringleitungen gebildet sein, welche entlang ihres Umfangs Öffnungen zum Durchtritt des Speichermediums aufweisen. Durch den Wärmetauscher im Regenerationskreislauf in dem mit der oder den Wärmequellen verbundenen Bereich des Regenerationskreislaufs kann ein anderes Wärmeträgermedium, beispielsweise Sole oder ein Glykol-Wassergemisch, zirkulieren.

Gemäß eines weiteren Aspekts der Erfindung wird ein Verfahren zum Betreiben eines erfindungsgemäßen Latentwärmespeichersystems vorgeschlagen, wobei das Latentwärmespeichersystem wenigstens einen Latentwärmespeicher, der ein Speichermedium mit latenter Wärme enthält, wenigstens eine mit dem Latentwärmespeicher gekoppelte Wärmepumpe und wenigstens einen Entzugskreislauf mit einem ersten Wärmeträgermedium, mit dem im Normalbetrieb bestimmungsgemäß Wärme aus dem Speichermedium entzogen und der Wärmepumpe eingangsseitig zugeführt wird, umfasst, wobei der wenigstens eine Latentwärmespeicher wenigstens einen in Kontakt mit dem Speichermedium stehenden Entzugswärmetauscher umfasst, der mit dem Entzugskreislauf verbunden ist. Wenigstens zeitweise wird ein zweites Wärmeträgermedium, das von wenigstens einer Wärmequelle erwärmt wird, in einen Abschnitt der Zuführleitung zugeführt.

Die Erfindung wirkt vorteilhaft in Betriebszuständen, in denen der Latentwärmespeicher stark oder vollständig thermisch entladen, d.h. das Speichermedium weitestgehend oder in einem vorbestimmten Bereich vollständig erstarrt ist und bei denen das zweite Wärmeträgermedium der wenigstens einen Wärmequelle eine höhere Temperatur als das erste Wärmeträgermedium des Entzugswärmetauschers aufweist.

Dann kann der Vorlauf der Wärmepumpe mit einem Wärmeträgermedium mit einer Temperatur beaufschlagt werden, die höher ist als die Temperatur, welche das erste Wärmeträgermedium am Ausgang des Entzugswärmetauschers Richtung Wärmepumpe aufweist. Das erste Wärmeträgermedium kann mit wärmerem zweitem Wärmeträgermedium der wenigstens einen Wärmequelle gemischt und entsprechend erwärmt werden. Die Vorlauftemperatur der Wärmepumpe kann hierdurch wenigstens zeitweise oberhalb einer kritischen Temperatur für den Vorlauf der Wärmepumpe gehalten werden, bei der die Wärmepumpe sonst stillgelegt werden muss. Hierdurch kann die Wärmepumpe trotz thermisch entladenem Latentwärmespeicher länger in Betrieb sein und einen Verbraucher mit Wärme versorgen.

Gemäß einer günstigen Ausgestaltung kann ein Regenerationskreislauf mit dem zweiten Wärmeträgermedium im Normalbetrieb bestimmungsgemäß Wärme von wenigstens einer Wärmequelle in das Speichermedium zugeführt werden, wobei der wenigstens eine Latentwärmespeicher eine Regenerationsanordnung innerhalb des Speichermediums umfasst, die mit dem Regenerationskreislauf verbunden ist. Günstigerweise kann die Wärmequelle ein Luftabsorber sein, eine Abluftanlage oder eine sonstige Wärmequelle. Optional kann eine Kombination von zwei oder mehr Wärmequellen vorgesehen sein. Zweckmäßigerweise kann das Wärmeträgermedium des Regenerationskreislaufs das gleich wie das erste Wärmeträgermedium sein. Hierdurch ist ein einfaches Mischen der Wärmeträgermedien durch die Kopplungsvorrichtung möglich.

Gemäß einer günstigen Ausgestaltung kann das Wärmeträgermedium mit variablem Volumenstrom zugeführt werden, insbesondere kann der Volumenstrom des zweiten Wärmeträgermediums abhängig von einer Vorlauftemperatur der Wärmepumpe eingestellt werden. Die Vorlauftemperatur der Wärmepumpe kann somit auch bei thermisch entladenem oder nahezu entladenem Latentwärmespeicher über weite Bereiche variiert werden, insbesondere angehoben werden. An warmen Wintertagen kann aus erhöhten Lufttemperaturen Nutzen gezogen und die Wärmepumpe weiterbetrieben werden, obwohl beispielsweise die Temperatur des ersten Wärmeträgermediums im Entzugswärmetauscher für die Wärmepumpe zu niedrig wäre und diese ausgeschaltet werden müsste. Das Latentwärmespeichersystem kann daher in der kalten Jahreszeit länger energetisch günstig betrieben werden.

Gemäß einer günstigen Ausgestaltung kann das zweite Wärmeträgermedium zugeführt werden, wenn ein vorgegebener Vereisungsgrad des Latentwärmespeichers bezogen auf ein bestimmungsgemäß vereisbares Volumen erreicht ist, vorzugsweise ab einem Vereisungsgrad von mindestens 90% bezogen auf ein bestimmungsgemäß vereisbares Volumen des Latentwärmespeichers.

Der Begriff "vereisbares Volumen" soll so verstanden werden, dass es sich um das Volumen handelt, in dem erstarrtes Speichermedium vorhanden ist, das Wassereis sein kann. Grundsätzlich kann jedoch auch ein anderes Speichermedium mit latenter Wärme vorgesehen sein.

Vorteilhaft ist vorgesehen, dass das maximal vereisbare Volumen kleiner ist als das Fassungsvermögen des Latentwärmespeichers. Bevorzugt ist das vereisbare Volumen auch bei maximalem Vereisungsgrad von flüssigem Speichermedium umgeben. Die Größe des maximal vereisbaren Volumens kann primär durch die Auslegung des Entzugswärmetauschers vorgegeben werden. Der Latentwärmespeicher kann so ausgelegt werden, dass unter Normalbedingungen das maximal vereisbare Volumen stets von flüssigem Speichermedium umgeben sein kann.

Gemäß einer günstigen Ausgestaltung kann das zweite Wärmeträgermedium zugeführt werden, wenn eine Temperatur des ersten Wärmeträgermediums des Entzugskreises kleiner oder gleich 1°C ist, vorzugsweise kleiner oder gleich 0°C ist, und das zweite Wärmeträgermedium der wenigstens einen Wärmequelle wärmer ist als das erste Wärmeträgermedium im Entzugswärmetauscher. Hiermit kann eine günstige Vorlauftemperatur der Wärmepumpe eingestellt werden und diese auch bei thermisch entladenem Latentwärmespeicher länger betrieben werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: ein Latentwärmespeichersystem nach einem Ausführungsbeispiel der Erfindung mit einer Regenerationsanordnung mit einem Wärmetauscher im Speichermedium;
- Fig. 2: ein Latentwärmespeichersystem nach einem Ausführungsbeispiel der Erfindung mit einer offenen Regenerationsanordnung im Speichermedium;
- Fig. 3: ein Ablaufschema zur Betriebsweise eines Latentwärmespeichersystems nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

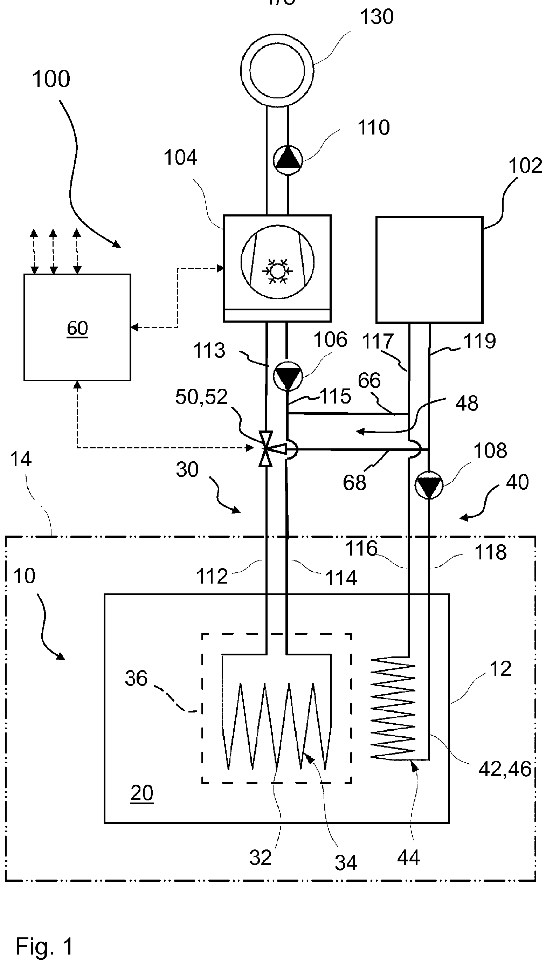

Figur 1 stellt ein Latentwärmespeichersystem 100 nach einem Ausführungsbeispiel der Erfindung dar. Das Latentwärmespeichersystem 100 umfasst einen Latentwärmespeicher 10, der ein Speichermedium 20 mit latenter Wärme enthält, beispielsweise Wasser. Ferner umfasst das Latentwärmespeichersystem 100 einen Entzugskreislauf 30, der im Normalbetrieb bestimmungsgemäß Wärme aus dem Speichermedium 20 entzieht und einen Regenerationskreislauf 40, mit dem im Normalbetrieb bestimmungsgemäß Wärme in das Speichermedium 20 zugeführt wird.

Im Normalbetrieb ist keine Fluid-Verbindung zwischen Entzugskreislauf 30 und Regenerationskreislauf 40 vorgesehen.

Der Latentwärmespeicher 10 umfasst einen in Kontakt mit dem Speichermedium 20 stehenden, insbesondere darin eingetauchten, Entzugswärmetauscher 32, der in dem Entzugskreislauf 30 angeordnet ist und eine Regenerationsanordnung 42 innerhalb des Speichermediums 20, die in dem Regenerationskreislauf 40 angeordnet ist. Der Latentwärmespeicher 10 weist eine Umwandung 12 auf, beispielsweise ein Gehäuse, die vorzugsweise im Erdreich vorgesehen oder angeordnet ist und die mit dem Speichermedium 20 gefüllt ist. Optional kann das Speichermedium 20 auch direkt im Erdreich vorgesehen sein, beispielsweise als Teichanlage oder Kaverne. Ein Bereich 14 des Erdreichs, der thermisch auf den Latentwärmespeicher 10 durch Wärmezufuhr oder Wärmeaufnahme einwirkt, ist mit einer Strich-Doppelpunktierten Linie angedeutet. Der Latentwärmespeicher 10 kann dabei selbst als Erdsonde wirken.

Im Entzugskreislauf 30 ist der Entzugswärmetauscher 32 über Leitungen 112, 114 mit einer Wärmepumpe 104 verbunden. Die Wärmepumpe 104 hebt das Temperaturniveau des Wärmeträgermediums 34 an und versorgt einen Verbraucher 130 mit Wärme auf entsprechend höherem Niveau.

Das Wärmeträgermedium 34 wird mit einer Förderpumpe 106 im Entzugskreislauf 30 umgewälzt. Die Wärmepumpe 104 versorgt mit einem nicht näher bezeichneten Kreislauf den Verbraucher 130, beispielsweise ein Gebäude, ein Wohnhaus oder dergleichen, mit Wärme und fördert ein entsprechendes Wärmeträgermedium mit einem Fördermittel 110, beispielsweise einer Förderpumpe.

Im Regenerationskreislauf 40 ist die Regenerationsanordnung 42 über Leitungen 116, 118 mit einer Wärmequelle 102 verbunden. Beispielhaft ist die Regenerationsanordnung 42 in Form eines Regenerationswärmetauschers 46 vorgesehen, der beispielsweise mit einem Luftabsorber als Wärmequelle 102 verbunden ist, welcher Wärme der Umgebungsluft aufnimmt. Das Wärmeträgermedium 44 im Regenerationskreislauf 40 wird mit einer Förderpumpe 108 umgewälzt. Es können alternativ oder zusätzlich auch andere Wärmequellen vorgesehen sein, etwa Ablufteinrichtungen und dergleichen.

In der Regenerationsanordnung 42 mit dem Regenerationswärmetauscher 46 zirkuliert das Wärmeträgermedium 44, das vorzugsweise dem Wärmeträgermedium 34 aus dem Entzugskreislauf 30 entspricht, beispielsweise Sole oder ein Wasser-Glykolgemisch.

Der Entzugswärmetauscher 32 entzieht im Normalbetrieb Wärme aus dem Speichermedium 20 und kühlt dieses dabei ab. Vorzugsweise kann bis zum thermischen Entladen eines vorgegebenen Bereichs 36 um den Entzugswärmetauscher 32 Wärme entnommen werden. Dies ist im Normalbetrieb beispielsweise im Verlauf des Winters der Fall. Von Beginn der kalten Jahreszeit bis zum Ende der kalten Jahreszeit erstarrt das Volumen 36 dabei sukzessive um Wärmetauscherrohre des Entzugswärmetauschers 32. Bei Wasser als Speichermedium 20 bildet sich in kontrollierter Weise beispielsweise ein monolithischer Eisblock, der im vollständig entladenen Zustand des Speichermediums 20 maximal das Volumen 36 einnimmt, in dem der Entzugswärmetauscher 32 eingebettet ist. Das maximale Volumen 36 ergibt sich im Wesentlichen aus der Auslegung des Entzugswärmetauschers 32.

Der Wärmeübertrag vom Speichermedium 20 in das Wärmeträgermedium 34 im Entzugswärmetauscher 32 erfolgt über den monolithischen Eisblock. Der Entzugswärmetauscher 32 ist im Entzugskreislauf 20 an die Wärmepumpe 104 angeschlossen, welche die entzogene Wärme auf ein höheres Temperaturniveau anhebt, das von dem Verbraucher 130 genutzt werden kann. Ein typisches Wärmeträgermedium 20 im Entzugskreislauf 30 kann beispielsweise Sole oder ein Glykol-Wassergemisch sein.

Die Regenerationsanordnung 42 gibt im Normalbetrieb Wärme in das Speichermedium 20 ab und erwärmt dieses dabei. Durch die Wärmezufuhr kann der thermisch entladene Latentwärmespeicher 10 thermisch aufgeladen werden und/oder das Entladen des Latentwärmespeichers 10 verzögert werden. Vorzugsweise wird beim thermischen Laden des Latentwärmespeichers 10 erstarrtes Speichermedium 20 um den Entzugswärmetauscher 32 wieder aufgetaut. Dies ist im Normalbetrieb beispielsweise im Verlauf des Sommers der Fall. Bevorzugt vom Beginn der warmen Jahreszeit an bis zum Ende der warmen Jahreszeit verflüssigt sich durch die Wärmezufuhr das erstarrte Speichermedium 20 am Entzugswärmetauscher 32 sukzessive in kontrollierter Weise, wobei der darin eingebettete Entzugswärmetauscher 32 wieder freigelegt wird. Bei Wasser als Speichermedium 20 wird in kontrollierter Weise der monolithische Eisblock aufgetaut. Der Wärmeeintrag des erwärmten Speichermediums 20 in das Wärmeträgermedium 34 im Entzugswärmetauscher 32 erfolgt über den schmelzenden monolithischen Eisblock. Wird nach vollständigem Abschmelzen des Eisblocks weiter Wärme über die Regenerationsanordnung 42 in den Latentwärmespeicher 10 zugeführt, steigt die Temperatur des Speichermediums 20 entsprechend an.

Entzugskreislauf 30 und Regenerationskreislauf 40 sind wegen ihrer verschiedenen Funktionen im Normalbetrieb hydraulisch streng getrennt.

Durch den beschränkten Wärmeübergang zwischen den Wärmetauscherrohren des Entzugswärmetauschers 32 ist das Wärmeträgermedium 34 im Entzugswärmetauscher 32 bei stark vereistem Speichermedium 20 schnell unterkühlt und liefert dann eine zu geringe Vorlauftemperatur an der Wärmepumpe 104 ab. Erfindungsgemäß ist eine Kopplungsvorrichtung 50 in der Verbindungsleitung 112 von dem Entzugswärmetauscher 32 zur Wärmepumpe 104 angeordnet, die wenigstens zeitweise Wärmeträgermedium 44 des Regenerationskreislaufs 40, das von wenigstens einer Wärmequelle 102 erwärmbar ist, in einen stromab der Kopplungsvorrichtung 50 vorgesehenen Abschnitt 113 der Verbindungsleitung 112 zuführt.

Die Kopplungsvorrichtung 50 stellt eine Fluidverbindung zwischen dem Regenerationskreislauf 40 und der Wärmepumpe 104 her, so dass die Regenerationsanordnung 42 wenigstens teilweise überbrückt ist.

Entzugskreislauf 30 und Regenerationskreislauf 40 stehen durch zwei Verbindungsleitungen 66, 68 in Strömungsverbindung. Die erste Verbindungsleitung 66 verbindet einen Abschnitt 115 des Entzugskreislaufs 30 stromab der Förderpumpe 106 mit einem Abschnitt 117 der Verbindungsleitung 116 zwischen Regenerationsanordnung 42 und Wärmequelle 102 des Regenerationskreises 40. Die zweite Verbindungsleitung 68 verbindet die Kopplungsvorrichtung 50 mit einem Abschnitt 119 der Verbindungsleitung 118 des Regenerationskreises 40 stromauf der Förderpumpe 108 im Regenerationskreislauf 40.

Dadurch wird ein Kreislauf 48 gebildet, bei dem das Wärmeträgermedium in Abschnitten 113, 115 der Verbindungsleitungen 112, 114 des Entzugskreislaufs 30, den Verbindungsleitungen 66, 68 und Abschnitten 117, 119 der Leitungen 116, 118 des Regenerationskreislaufs 40, der Wärmepumpe 104 und der Wärmequelle 102 zirkuliert. Vorzugsweise kann die Förderpumpe 108 im Regenerationskreislauf 40 gestoppt sein, wenn die Kopplungsvorrichtung 50 einen Volumenstrom des zweiten Wärmeträgermediums 44 in das erste Wärmeträgermedium 34 zumischt.

Die Kopplungsvorrichtung 50 ist vorzugsweise als regelbares und/oder steuerbares Mischelement 52 ausgebildet, so dass das zweite Wärmeträgermedium 44 aus dem Regenerationskreislauf 40 mit variablem Volumenstrom beigemischt werden kann.

Eine Regel- und/oder Steuervorrichtung 60 ist vorgesehen, welche die Kopplungsvorrichtung 50 abhängig von wenigstens einem Betriebsparameter des Latentwärmespeichers 10 und/oder des Latentwärmespeichersystems 100 betätigt. Insbesondere kann der wenigstens eine Betriebsparameter ein Vereisungsgrad des Latentwärmespeichers und/oder eine Temperatur des ersten Wärmeträgermediums sein.

Die Regel- und/oder Steuervorrichtung 60 kann vorteilhaft mit verschiedenen weiteren Komponenten und Sensoren des Latentwärmespeichersystems 100 in Verbindung stehen, etwa mit den Fördermitteln 106, 108, nicht dargestellten Temperatursensoren, welche der Wärmepumpe 104 und der Wärmequelle 102 zugeordnet sind, und dergleichen, was mit unterbrochenen Doppelpfeilen an der Regel- und/oder Steuervorrichtung 60 angedeutet ist.

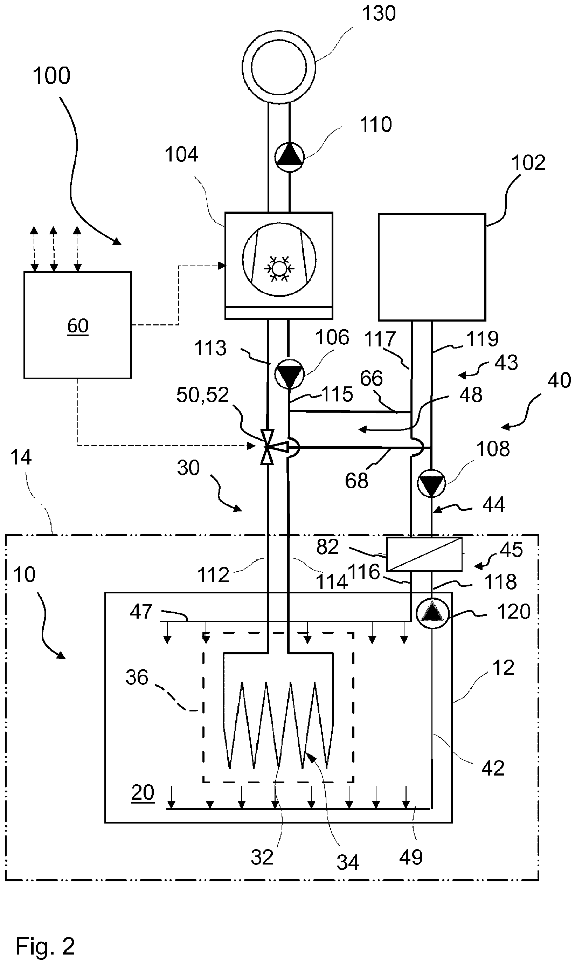

Figur 2 zeigt ein Latentwärmespeichersystem 100 nach einem Ausführungsbeispiel der Erfindung. Die Anordnung entspricht in weiten Bereichen dem Ausführungsbeispiel in Figur 1, so dass zur Vermeidung unnötiger Wiederholungen bevorzugt auf Unterschiede zwischen den beiden Ausführungsbeispielen eingegangen wird.

In dem Ausführungsbeispiel in der Figur ist die Regenerationsanordnung 42 des Regenerationskreises 40 als "offenes" System ausgebildet und weist statt eines Wärmetauschers 46 (Figur 1) zum Speichermedium 20 hin offene Zuflüsse 47 und Abflüsse 49 im Latentwärmespeicher 10 auf.

Der Regenerationskreis 40 umfasst zwei Abschnitte 43, 45, einen wärmequellennahen Abschnitt 43 und einen latentwärmespeichernahen Abschnitt 45, welche durch einen Wärmetauscher 82 getrennt sind. Im Abschnitt 45 fördert ein Fördermittel 120, beispielsweise eine Pumpe, das Wärmeträgermedium 20, welches in diesem Bereich das Wärmeträgermedium des Regenerationskreislaufs 40 bildet, im Abschnitt 43 fördert das Fördermittel 108 das zweite Wärmeträgermedium 44 des Regenerationskreislaufs 40. Im Abschnitt 45 zirkuliert das Speichermedium 20 als zweites Wärmeträgermedium 44, im Abschnitt 43 zirkuliert als zweites Wärmeträgermedium 44 vorzugsweise dasselbe Medium wie im Entzugskreislauf 30.

Beispielsweise können die Zuflüsse 47 und Abflüsse 49 durch Ringleitungen im nichtvereisenden Bereich des Latentwärmespeichers 10 gebildet sein, welche entlang ihres Umfangs Öffnungen zum Durchtritt des Speichermediums 20 aufweisen, welche das Wärmeträgermedium 44 des Abschnitts 45 darstellt.

Der Wärmetauscher 82 stellt auch eine Trennung der Kreisläufe in dem Abschnitt 45 der offenen Regenerationsanordnung 42 und dem Kreislauf 48 mit Leitungen 113, 115, 106, 66,117, 119, 66, dar.

Wird Wärmeträgermedium 44 aus dem Abschnitt 43 des Regenerationskreislaufs 40 über die Kopplungsvorrichtung 50 in den Vorlauf zur Wärmepumpe 104 zugemischt, kann das Fördermittel 120 im latentwärmespeichernahe Abschnitt 45 des Regenerationskreislaufs 40 stillgelegt sein.

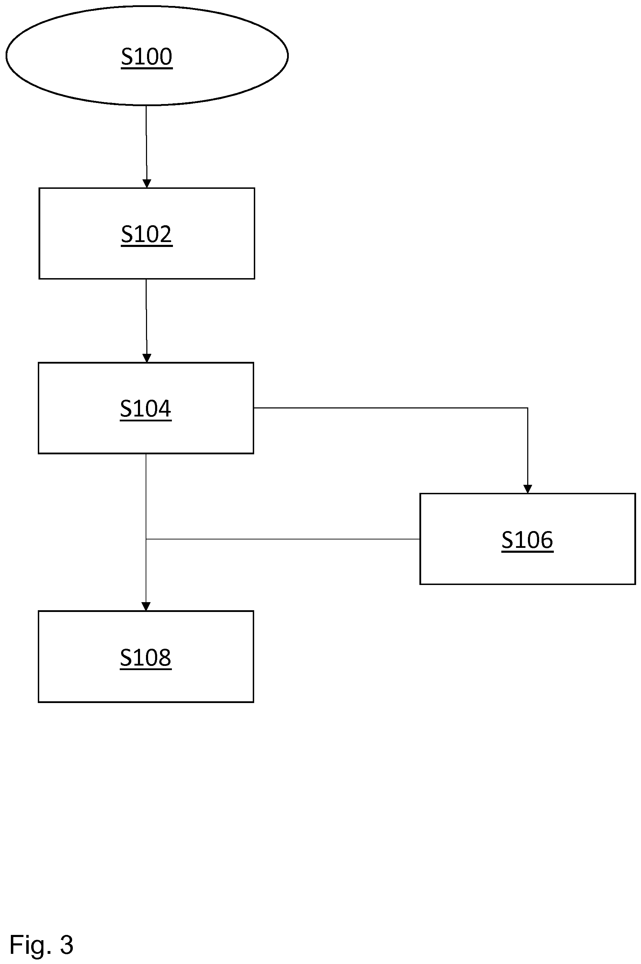

Figur 3 zeigt ein Ablaufschema zur Betriebsweise eines Latentwärmespeichersystems 100, wie es in den Figuren 1, 2 dargestellt ist, nach einem Ausführungsbeispiel der Erfindung. Auf die Latentwärmespeichersysteme 100 in den Figuren 1, 2 wird im Folgenden Bezug genommen.

Das Verfahren zum Betreiben des Latentwärmespeichersystems 100 sieht vor, dass wenigstens zeitweise ein zweites Wärmeträgermedium 44, das von wenigstens einer Wärmequelle 102 erwärmt wird, in einen stromab einer Kopplungsvorrichtung 50 angeordneten Abschnitt 113 einer Verbindungsleitung 112 zu einer Wärmepumpe 108 im Entzugskreislauf 30 mit einem ersten Wärmeträgermedium 32 zugeführt, insbesondere dem ersten Wärmeträgermedium 32 zugemischt wird. Dies kann vorteilhaft mit variablem Volumenstrom des zweiten Wärmeträgermediums 44 erfolgen, insbesondere kann der Volumenstrom des zweiten Wärmeträgermediums 44 abhängig von einer Vorlauftemperatur der Wärmepumpe 104 eingestellt werden.

Das zweite Wärmeträgermedium 44 wird vorzugsweise zugeführt, wenn ein vorgegebener Vereisungsgrad des Latentwärmespeichers 10 bezogen auf ein bestimmungsgemäß vereisbares Volumen 36 erreicht ist, vorzugsweise ab einem Vereisungsgrad von mindestens 90% bezogen auf ein bestimmungsgemäß vereisbares Volumen 36 des Latentwärmespeichers 10.

Das zweite Wärmeträgermedium 44 kann insbesondere zugeführt werden, wenn eine Temperatur des ersten Wärmeträgermediums 34 des Entzugskreises 30 kleiner oder gleich 1°C ist, vorzugsweise kleiner oder gleich 0°C ist, und das zweite Wärmeträgermedium 44 der wenigstens einen Wärmequelle 102 wärmer ist als das erste Wärmeträgermedium 32.

In S100 liegt an der Steuer- und oder Regeleinheit 60 des Latentwärmespeichersystems 100 eine Anforderung zum Heizen eines Verbrauchers 130 vor. Der Latentwärmespeicher 10 ist nahezu entladen und die Temperatur des Wärmeträgermediums 34 im Entzugskreislauf 30 niedrig, beispielsweise nahe 0°C. Bei S102 werden IST-Werte zwischen der Wärmequelle 102 und dem Latentwärmespeicher 10 verglichen. Die Wärmequelle 102 kann ein Dachabsorber sein. Optional können zusätzlich oder alternativ andere Wärmequellen mit dem Regenerationskreislauf 40 gekoppelt sein.

In S104 wird die Wärmepumpe 104 mit dem Wärmeträgermedium 32, 44 der wärmeren der beiden Energiequellen Latentwärmespeicher 10 und Wärmequelle 102 versorgt. Bleibt die Temperatur des betreffenden Wärmeträgermediums 34 oder 44 im Betrieb oberhalb der des anderen Wärmeträgermediums 44 oder 34, wird in S106 der Heizvorgang mit dieser Quelle fortgesetzt, solange diese Temperatur höher ist als die andere. Die Wärmepumpe 104 erhält somit die höchstmögliche Vorlauftemperatur des Latentwärmespeichersystems 100.

Sinkt jedoch die Temperatur des betreffenden Wärmeträgermediums 34 oder 44 unterhalb die Temperatur des anderen, bisher kälteren Wärmeträgermediums 44 oder 34, werden in S108 die Volumenströme aus Wärmequelle 102 und Entzugswärmetauscher 32 mittels der Kopplungsvorrichtung 50 gemischt, bis sich die im Latentwärmespeichersystems 100 größtmögliche Mischtemperatur der Wärmeträgermedien 34, 44 einstellt. In diesen Pfad kann das System auch von S106 wechseln, wenn die Temperatur des wärmeren Wärmeträgermediums 34 oder 44 zu stark absinkt.

## Patentansprüche

1. Latentwärmespeichersystem (100) umfassend
wenigstens einen Latentwärmespeicher (10), der ein Speichermedium (20) mit latenter Wärme enthält,
wenigstens eine mit dem Latentwärmespeicher (10) gekoppelte Wärmepumpe (104),
wenigstens einen Entzugskreislauf (30) mit einem ersten Wärmeträgermedium (34), mit dem im Normalbetrieb bestimmungsgemäß Wärme aus dem Speichermedium (20) entziehbar und der Wärmepumpe (104) eingangsseitig zuführbar ist, sowie
einen in Kontakt mit dem Speichermedium (20) stehenden Entzugswärmetauscher (32), wobei der Entzugswärmetauscher (32) mit dem Entzugskreislauf (30) verbunden ist,
wobei eine Kopplungsvorrichtung (50) in einer Verbindungsleitung (112) zwischen dem Entzugswärmetauscher (32) und der Wärmepumpe (104) angeordnet ist, die wenigstens zeitweise ein zweites Wärmeträgermedium (44), das von wenigstens einer Wärmequelle (102) erwärmbar ist, in einen Abschnitt (113) der Verbindungsleitung (112) zuführt,
**dadurch gekennzeichnet, dass**
wenigstens ein Regenerationskreislauf (40) mit dem zweiten Wärmeträgermedium (44) vorgesehen ist, mit dem im Normalbetrieb bestimmungsgemäß Wärme von wenigstens einer Wärmequelle (102) in das Speichermedium (20) zuführbar ist,
wobei der wenigstens eine Latentwärmespeicher (10) eine Regenerationsanordnung (42) innerhalb des Speichermediums (20) umfasst, wobei die Regenerationsanordnung (42) mit dem Regenerationskreislauf (40) verbunden ist,
wobei der Entzugskreislauf (30) mit dem Entzugswärmetauscher (32) und der Regenerationskreislauf (40) mit der Regenerationseinrichtung (42) im Normalbetrieb hydraulisch getrennt vorgesehen sind,
wobei Entzugskreislauf (30) und Regenerationskreislauf (40) zeitweise durch Verbindungsleitungen (66, 68) in Strömungsverbindung stehen, wobei eine erste Verbindungsleitung (66) einen Abschnitt (115) des Entzugskreises (30) stromab oder stromauf eines Fördermittels (106) mit einer Verbindungsleitung (116) zwischen Regenerationseinrichtung (42) und Wärmequelle (102) des Regenerationskreises (40) verbindet und eine zweite Verbindungsleitung (68) die Kopplungsvorrichtung (50) mit einem Abschnitt (119) des Regenerationskreises (40) stromauf oder stromab eines Fördermittels (108) im Regenerationskreislauf (40) verbindet,
so dass das erste Wärmeträgermedium (34) mit dem zweiten Wärmeträgermediums (44) mischbar und erwärmbar ist.

2. Latentwärmespeichersystem nach Anspruch 1, **dadurch gekennzeichnet, dass** der Abschnitt (113), in den das zweite Wärmeträgermedium (44) zugemischt wird, zwischen Kopplungsvorrichtung (50) und Wärmepumpe (104) angeordnet ist.

3. Latentwärmespeichersystem nach Anspruch 1 oder 2, **dadurch gekennzeichnet, dass** die Kopplungsvorrichtung (50) den Regenerationskreislauf (40) mit der Wärmepumpe (104) strömungsmäßig verbindet und die Regenerationseinrichtung (42) wenigstens teilweise überbrückt ist.

4. Latentwärmespeichersystem nach einem der vorhergehenden Ansprüche, **dadurch gekennzeichnet, dass** die Kopplungsvorrichtung (50) ein regelbares und/oder steuerbares Mischelement (52) umfasst.

5. Latentwärmespeichersystem nach einem der vorhergehenden Ansprüche, **dadurch gekennzeichnet, dass** eine Regel- und/oder Steuervorrichtung (60) vorgesehen ist, welche die Kopplungsvorrichtung (50) abhängig von wenigstens einem Betriebsparameter des Latentwärmespeichers (10) und/oder des Latentwärmespeichersystems (100) betätigt.

6. Latentwärmespeichersystem nach einem der vorhergehenden Ansprüche, **dadurch gekennzeichnet, dass** der wenigstens eine Regenerationskreislauf (40) als Wärmequelle (102) einen Luftabsorber aufweist.

7. Latentwärmespeichersystem nach einem der vorhergehenden Ansprüche, **dadurch gekennzeichnet, dass** die Regenerationseinrichtung (42) einen im Speichermedium (20) angeordneten Wärmetauscher (46) aufweist.

8. Latentwärmespeichersystem nach einem der vorhergehenden Ansprüche, **dadurch gekennzeichnet, dass** die Regenerationseinrichtung (42) einen oder mehrere Zuflüsse (47) und Abflüsse (49) im Latentwärmespeicher (10) aufweist und das Speichermedium (20) wenigstens bereichsweise im Regenerationskreislauf (40) zirkuliert.

9. Verfahren zum Betreiben eines Latentwärmespeichersystems (100) nach einem der vorhergehenden Ansprüche, wobei das Latentwärmespeichersystem (100) wenigstens einen Latentwärmespeicher (10), der ein Speichermedium (20) mit latenter Wärme enthält, wenigstens eine mit dem Latentwärmespeicher (10) gekoppelte Wärmepumpe (104) und wenigstens einen Entzugskreislauf (30) mit einem ersten Wärmeträgermedium (34), mit dem im Normalbetrieb bestimmungsgemäß Wärme aus dem Speichermedium (20) entzogen und der Wärmepumpe (104) eingangsseitig zugeführt wird, umfasst, wobei der wenigstens eine Latentwärmespeicher (10) wenigstens einen in Kontakt mit dem Speichermedium (20) stehenden Entzugswärmetauscher (32) umfasst, der mit dem Entzugskreislauf (30) verbunden ist,
**dadurch gekennzeichnet,**
**dass** wenigstens zeitweise ein zweites Wärmeträgermedium (44), das von wenigstens einer Wärmequelle (102) erwärmt wird, in einen Abschnitt (113) der Verbindungsleitung (112) zugeführt wird,
wobei wenigstens ein Regenerationskreislauf (40) mit dem zweiten Wärmeträgermedium (44) vorgesehen ist, mit dem im Normalbetrieb bestimmungsgemäß Wärme von wenigstens einer Wärmequelle (102) in das Speichermedium (20) zugeführt wird,
wobei der wenigstens eine Latentwärmespeicher (10) eine Regenerationsanordnung (42) innerhalb des Speichermediums (20) umfasst, wobei die Regenerationsanordnung (42) mit dem Regenerationskreislauf (40) verbunden ist,
wobei der Entzugskreislauf (30) mit dem Entzugswärmetauscher (32) und der Regenerationskreislauf (40) mit der Regenerationseinrichtung (42) im Normalbetrieb hydraulisch getrennt vorgesehen sind,
wobei Entzugskreislauf (30) und Regenerationskreislauf (40) zeitweise durch Verbindungsleitungen (66, 68) in Strömungsverbindung stehen, wobei eine erste Verbindungsleitung (66) einen Abschnitt (115) des Entzugskreises (30) stromab oder stromauf eines Fördermittels (106) mit einer Verbindungsleitung (116) zwischen Regenerationseinrichtung (42) und Wärmequelle (102) des Regenerationskreises (40) verbindet und eine zweite Verbindungsleitung (68) die Kopplungsvorrichtung (50) mit einem Abschnitt (119) des Regenerationskreises (40) stromauf oder stromab eines Fördermittels (108) im Regenerationskreislauf (40) verbindet,
so dass das erste Wärmeträgermedium (34) mit dem zweiten Wärmeträgermediums (44) mischbar und erwärmbar ist.

10. Verfahren nach Anspruch 9, **dadurch gekennzeichnet, dass** das zweite Wärmeträgermedium (44) mit variablem Volumenstrom zugeführt wird, insbesondere wobei der Volumenstrom des zweiten Wärmeträgermediums (44) abhängig von einer Vorlauftemperatur der Wärmepumpe (104) eingestellt wird.

11. Verfahren nach einem der Ansprüche 9 bis 10, **dadurch gekennzeichnet, dass** das zweite Wärmeträgermedium (44) zugeführt wird, wenn ein vorgegebener Vereisungsgrad des Latentwärmespeichers (10) bezogen auf ein bestimmungsgemäß vereisbares Volumen (36) erreicht ist, vorzugsweise ab einem Vereisungsgrad von mindestens 90% bezogen auf ein bestimmungsgemäß vereisbares Volumen (36) des Latentwärmespeichers (10).

12. Verfahren nach einem der Ansprüche 9 bis 11, **dadurch gekennzeichnet, dass** das zweite Wärmeträgermedium (44) zugeführt wird, wenn eine Temperatur des ersten Wärmeträgermediums (34) des Entzugskreises (30) kleiner oder gleich 1°C ist, vorzugsweise kleiner oder gleich 0°C ist, und das zweite Wärmeträgermedium (44) der wenigstens einen Wärmequelle (102) wärmer ist als das erste Wärmeträgermedium (32).

## Claims

1. Latent heat storage system (100) comprising
at least one latent heat storage device (10), which contains a storage medium (20) with latent heat,
at least one heat pump (104) coupled to the latent heat storage device (10),
at least one extraction circuit (30), which has a first heat transfer medium (34), with which, during normal operation, in accordance with the intended purpose, heat can be extracted from the storage medium (20) and supplied to the heat pump (104) on the input side, and
an extraction heat exchanger (32), which is in contact with the storage medium (20), wherein the extraction heat exchanger (32) is connected to the extraction circuit (30),
wherein a coupling device (50) is arranged in a connection line (112) between the extraction heat exchanger (32) and the heat pump (104), which at least intermittently supplies a second heat transfer medium (44), which can be heated by at least one heat source (102), into a portion (113) of the connection line (112),
**characterised in that**
at least one regeneration circuit (40) is provided with the second heat transfer medium (44), with which, during normal operation, in accordance with the intended purpose, heat from at least one heat source (102) can be supplied into the storage medium (20),
wherein the at least one latent heat storage device (10) comprises a regeneration device (42) within the storage medium (20), wherein the regeneration device (42) is connected to the regeneration circuit (40),
wherein the extraction circuit (30) with the extraction heat exchanger (32) and the regeneration circuit (40) with the regeneration device (42) are provided hydraulically separated, during normal operation,
wherein the extraction circuit (30) and the regeneration circuit (40) are intermittently flowably connected by means of connection lines (66, 68), wherein a first connection line (66) connects a portion (115) of the extraction circuit (30) downstream or upstream of a conveyor unit (106) to a connection line (116) between the regeneration device (42) and the heat source (102) of the regeneration circuit (40) and a second connection line (68) connects the coupling device (50) to a portion (119) of the regeneration circuit (40) upstream or downstream of a conveyor unit (108) within the regeneration circuit (40) such that the first heat transfer medium (34) can be mixed and heated with the second heat transfer medium (44).

2. Latent heat storage system according to claim 1, **characterised in that** the portion (113) in which the second heat transfer medium (44) is mixed, is arranged between the coupling device (50) and the heat pump (104).

3. Latent heat storage system according to claim 1 or 2, **characterised in that** the coupling device (50) fluidly connects the regeneration circuit (40) to the heat pump (104) and the regeneration device (42) is at least partly bridged.

4. Latent heat storage system according to any of the preceding claims, **characterised in that** the coupling device (50) comprises an adjustable and/or controllable mixer element (52).

5. Latent heat storage system according to any of the preceding claims, **characterised in that** an adjustment and/or control device (60) is provided, which actuates the coupling device (50) on the basis of at least one operating parameter of the latent heat storage device (10) and/or the latent heat storage system (100).

6. Latent heat storage system according to any of the preceding claims, **characterised in that** the at least one regeneration circuit (40) has an air absorber as the heat source (102).

7. Latent heat storage system according to any of the preceding claims, **characterised in that** the regeneration device (42) has a heat exchanger (46) arranged in the storage medium (20).

8. Latent heat storage system according to any of the preceding claims, **characterised in that** the regeneration device (42) has one or more inflows (47) and outflows (49) within the latent heat storage device (10) and the storage medium (20) circulates at least in certain areas within the regeneration circuit (40).

9. Method for operating a latent heat storage system (100) according to any of the preceding claims, wherein the latent heat storage system (100) comprises at least one latent heat storage device (10), which contains a storage medium (20) with latent heat, at least one heat pump (104) coupled to the latent heat storage device (10) and at least one extraction circuit (30), which has a first heat transfer medium (34), with which, during normal operation, in accordance with the intended purpose, heat is extracted from the storage medium (20) and supplied to the heat pump (104) on the input side, wherein the at least one latent heat storage device (10) comprises at least one extraction heat exchanger (32), which is in contact with the storage medium (20) and which is connected to the extraction circuit (30),
**characterised in**
**that** at least intermittently a second heat transfer medium (44), which is heated by at least one heat source (102), is supplied into a portion (113) of the connection line (112),
wherein at least one regeneration circuit (40) is provided with the second heat transfer medium (44), with which, during normal operation, in accordance with the intended purpose, heat from at least one heat source (102) is supplied into the storage medium (20),
wherein the at least one latent heat storage device (10) comprises a regeneration device (42) within the storage medium (20), wherein the regeneration device (42) is connected to the regeneration circuit (40),
wherein the extraction circuit (30) with the extraction heat exchanger (32) and the regeneration circuit (40) with the regeneration device (42), during normal operation, are provided hydraulically separated,
wherein the extraction circuit (30) and the regeneration circuit (40) are intermittently flowably connected by means of connection lines (66, 68), wherein a first connection line (66) connects a portion (115) of the extraction circuit (30) downstream or upstream of a conveyor unit (106) to a connection line (116) between the regeneration device (42) and the heat source (102) of the regeneration circuit (40) and a second connection line (68) connects the coupling device (50) to a portion (119) of the regeneration circuit (40) upstream or downstream of a conveyor unit (108) within the regeneration circuit (40) such that the first heat transfer medium (34) can be mixed and heated with the second heat transfer medium (44).

10. Method according to claim 9, **characterised in that** the second heat transfer medium (44) is supplied with a variable volumetric flow, in particular wherein the volumetric flow of the second heat transfer medium (44) is adjusted on the basis of a flow temperature of the heat pump (104).

11. Method according to any of claims 9 to 10, **characterised in that** the second heat transfer medium (44) is supplied when a predetermined freezing level of the latent heat storage device (10) relative to a freezable volume (36), in accordance with the intended purpose, is reached, preferably above a freezing level of at least 90% relative to a freezable volume (36) of the latent heat storage device (10), in accordance with the intended purpose.

12. Method according to any of claims 9 to 11, **characterised in that** the second heat transfer medium (44) is supplied when a temperature of the first heat transfer medium (34) of the extraction circuit (30) is 1°C or below, preferably 0°C or below, and the second heat transfer medium (44) of the at least one heat source (102) is warmer than the first heat transfer medium (32).

## Revendications

1. Système d'accumulation de chaleur latente (100) comprenant
au moins un accumulateur de chaleur latente (10) qui contient un fluide d'accumulation (20) avec chaleur latente,
au moins une pompe à chaleur (104) couplée au accumulateur de chaleur latente (10),
au moins un circuit d'extraction (30) ayant un premier fluide caloporteur (34), avec lequel en fonctionnement normal et conformément à sa destination, de la chaleur peut être extraite du fluide d'accumulation (20) et acheminée à la pompe à chaleur (104) du côté de l'entrée, ainsi que
un échangeur de chaleur à extraction (32) qui se trouve en contact avec le fluide d'accumulation (20), dans lequel l'échangeur de chaleur à extraction (32) est relié au circuit d'extraction (30),
dans lequel un dispositif de couplage (50) est disposé dans une conduite de liaison (112) entre l'échangeur de chaleur à extraction (32) et la pompe à chaleur (104), qui achemine au moins temporairement un second fluide caloporteur (44) qui peut être chauffé par au moins une source de chaleur (102) dans une portion (113) de la conduite de liaison (112),
**caractérisé en ce que**
au moins un circuit de régénération (40) est prévu avec le second fluide caloporteur (44) avec lequel en fonctionnement normal et conformément à sa destination, de la chaleur peut être acheminée d'au moins une source de chaleur (102) dans le fluide d'accumulation (20),
dans lequel l'au moins un accumulateur de chaleur latente (10) comprend un agencement de régénération (42) à l'intérieur du fluide d'accumulation (20), dans lequel l'agencement de régénération (42) est relié au circuit de régénération (40),
dans lequel le circuit d'extraction (30) avec l'échangeur de chaleur à extraction (32) et le circuit de régénération (40) sont reliés hydrauliquement de façon séparée avec le dispositif de régénération (42) en fonctionnement normal,
dans lequel le circuit d'extraction (30) et le circuit de régénération (40) se trouvent temporairement en relation de fluide par des conduites de liaison (66, 68), dans lequel une première conduite de liaison (66) relie une portion (115) du circuit d'extraction (30) en aval ou en amont d'un moyen de transport (106) avec une conduite de liaison (116) entre le dispositif de régénération (42) et la source de chaleur (102) du circuit de régénération (40) et une seconde conduite de liaison (68) relie le dispositif de couplage (50) avec une portion (119) du circuit de régénération (40) en amont ou en aval d'un moyen de transport (108) dans le circuit de régénération (40),
de sorte que le premier fluide caloporteur (34) puisse être mélangé et chauffé avec le second fluide caloporteur (44).

2. Système d'accumulation de chaleur latente selon la revendication 1, **caractérisé en ce que** la portion (113) dans laquelle le second fluide caloporteur (44) est mélangé, est disposée entre le dispositif de couplage (50) et la pompe à chaleur (104).

3. Système d'accumulation de chaleur latente selon la revendication 1 ou 2, **caractérisé en ce que** le dispositif de couplage (50) relie de façon fluidique le circuit de régénération (40) avec la pompe à chaleur (104) et contourne au moins partiellement le dispositif de régénération (42).

4. Système d'accumulation de chaleur latente selon l'une quelconque des revendications précédentes, **caractérisé en ce que** le dispositif de couplage (50) comprend un élément de mélange (52) pouvant être réglé et/ou commandé.

5. Système d'accumulation de chaleur latente selon l'une quelconque des revendications précédentes, **caractérisé en ce qu'**est prévu un dispositif de réglage et/ou de commande (60), lequel actionne le dispositif de couplage (50) en fonction d'au moins un paramètre de fonctionnement d'accumulateur de chaleur latente (10) et ou du système d'accumulation de chaleur latente (100).

6. Système d'accumulation de chaleur latente selon l'une quelconque des revendications précédentes, **caractérisé en ce que** l'au moins un circuit de régénération (40) présente comme source de chaleur (102) un absorbeur d'air.

7. Système d'accumulation de chaleur latente selon l'une quelconque des revendications précédentes, **caractérisé en ce que** le dispositif de régénération (42) présente un échangeur de chaleur (46) disposé dans le fluide d'accumulation (20).

8. Système d'accumulation de chaleur latente selon l'une quelconque des revendications précédentes, **caractérisé en ce que** le dispositif de régénération (42) présente un ou plusieurs flux entrants (47) et sortants (49) dans l'accumulateur de chaleur latente (10) et le fluide d'accumulation (20) circule au moins par endroits dans le circuit de régénération (40).

9. Procédé pour faire fonctionner un système d'accumulation de chaleur latente (100) selon l'une quelconque des revendications précédentes, dans lequel le système d'accumulation de chaleur latente (100) comprend au moins un accumulateur de chaleur latente (10) qui contient un fluide d'accumulation (20) avec chaleur latente, au moins une pompe à chaleur (104) couplée au l'accumulateur de chaleur latente (10) et au moins un circuit d'extraction (30) ayant un premier fluide caloporteur (34), avec lequel en fonctionnement normal et conformément à sa destination, de la chaleur peut être extraite du fluide d'accumulation (20) et acheminée à la pompe à chaleur (104) du côté de l'entrée, dans lequel l'au moins un accumulateur de chaleur latente (10) comprend au moins un échangeur de chaleur à extraction (32) qui se trouve en contact avec le fluide d'accumulation (20), qui est relié au circuit d'extraction (30),
**caractérisé en ce que**
au moins temporairement un second fluide caloporteur (44) qui est chauffé par au moins une source de chaleur (102) est acheminé dans une portion (113) de la conduite de liaison (112),
dans lequel au moins un circuit de régénération (40) est prévu avec le second fluide caloporteur (44) avec lequel en fonctionnement normal et conformément à sa destination, de la chaleur est acheminée d'au moins une source de chaleur (102) dans le fluide d'accumulation (20),
dans lequel l'au moins un accumulateur de chaleur latente (10) comprend un agencement de régénération (42) à l'intérieur du fluide d'accumulation (20), dans lequel l'agencement de régénération (42) est relié au circuit de régénération (40),
dans lequel le circuit d'extraction (30) avec l'échangeur de chaleur à extraction (32) et le circuit de régénération (40) sont reliés hydrauliquement de façon séparée avec le dispositif de régénération (42) en fonctionnement normal,
dans lequel le circuit d'extraction (30) et le circuit de régénération (40) se trouvent temporairement en relation de fluide par des conduites de liaison (66, 68), dans lequel une première conduite de liaison (66) relie une portion (115) du circuit d'extraction (30) en aval ou en amont d'un moyen de transport (106) avec une conduite de liaison (116) entre le dispositif de régénération (42) et la source de chaleur (102) du circuit de régénération (40) et une seconde conduite de liaison (68) relie le dispositif de couplage (50) avec une portion (119) du circuit de régénération (40) en amont ou en aval d'un moyen de transport (108) dans le circuit de régénération (40),
de sorte que le premier fluide caloporteur (34) puisse être mélangé et chauffé avec le second fluide caloporteur (44).

10. Procédé selon la revendication 9, **caractérisé en ce que** le second fluide caloporteur (44) est acheminé avec un flux volumique variable, en particulier dans lequel le flux volumique du second fluide caloporteur (44) est ajusté en fonction d'une température de départ de la pompe à chaleur (104).

11. Procédé selon l'une quelconque des revendications 9 à 10, **caractérisé en ce que** le second fluide caloporteur (44) est acheminé lorsqu'un degré de givrage prédéterminé d'accumulateur de chaleur latente (10) par rapport à un volume pouvant être givré (36) conformément à sa destination est atteint, de préférence à partir d'un degré de givrage d'au moins 90 % par rapport à un volume pouvant être givré (36) conformément à sa destination d'accumulateur de chaleur latente (10).

12. Procédé selon l'une quelconque des revendications 9 à 11, **caractérisé en ce que** le second fluide caloporteur (44) est acheminé lorsqu'une température du premier fluide caloporteur (34) du circuit d'extraction (30) est inférieure ou égale à 1 °C, de préférence inférieure ou égale à 0 °C, et le second fluide caloporteur (44) de l'au moins une source de chaleur (102) est plus chaud que le premier fluide caloporteur (32).
